(19)

**Europäisches Patentamt**

**European Patent Office**

**Office européen des brevets**

(11) **EP 2 913 969 B1**

(12) **EUROPEAN PATENT SPECIFICATION**

(45) Date of publication and mention
of the grant of the patent:
**06.07.2016  Bulletin 2016/27**

(51) Int Cl.:
***H04L 27/26*** *(2006.01)*      ***H04L 25/02*** *(2006.01)*

(21) Application number: **14156875.8**

(22) Date of filing: **26.02.2014**

(54) **REDUCTION OF OQAM INTRINSIC INTERFERENCE ON PILOT FOR CHANNEL ESTIMATION**

VERFAHREN UND VORRICHTUNG ZUR ÜBERTRAGUNG EINES MEHRTRÄGERSIGNALS

APPAREIL ET PROCÉDÉ DE TRANSMISSION D'UN SIGNAL MULTIPORTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.09.2015  Bulletin 2015/36**

(73) Proprietor: **NTT DoCoMo, Inc.**
**Tokyo (JP)**

(72) Inventors:
 • **Weitkemper, Petra**
  **Tokyo (JP)**
 • **Bazzi, Jamal**
  **Tokyo (JP)**
 • **Kusume, Katsutoshi**
  **Tokyo (JP)**

(74) Representative: **Betten & Resch**
**Patent- und Rechtsanwälte PartGmbB**
**Maximiliansplatz 14**
**80333 München (DE)**

(56) References cited:
**WO-A2-2008/007019**

 • **JAVAUDIN J-P ET AL: "Pilot-aided channel estimation for OFDM/OQAM", VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, vol. 3, 22 April 2003 (2003-04-22), pages 1581-1585, XP010862427, DOI: 10.1109/VETECS.2003.1207088 ISBN: 978-0-7803-7757-8**
 • **FRANCE TELECOM ET AL: "Some practical aspects for OFDM/OQAM channel estimation", 3GPP DRAFT; R1-051458, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20051031, 31 October 2005 (2005-10-31), XP050101048, [retrieved on 2005-10-31]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention relates to a method and an apparatus for transmitting a multicarrier signal, and more specifically to a transmission scheme based on FBMC/OQAM, and the use of precoding to improve channel estimation performance and thus overall transmission performance.

**BACKGROUND OF THE INVENTION**

Filter Bank Multicarrier (FBMC) Offset Quadrature Amplitude Modulation (OQAM) can be briefly introduced as follows: FBMC/OQAM is a multicarrier modulation scheme where each subcarrier is modulated with a staggered OQAM. Compared to conventional OFDM which transmits complex-valued symbols at a given symbol rate, FBMC/OQAM transmits real-valued symbols representing half the number of information bits at twice the symbol rate. Based on this, both mechanisms have the same spectral efficiency. However, since FBMC/OQAM operates without the addition of the Cyclic Prefix (CP) it provides a higher useful bit rate and thus better spectral efficiency.

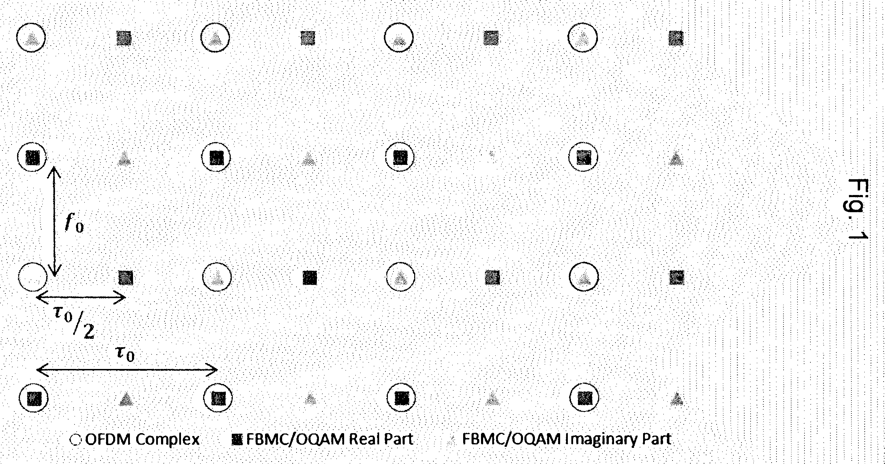

Figure 1 shows the signal structures of CP-OFDM and FBMC/OQAM system in the time and frequency domain. It can be seen that for CP-OFDM the symbol duration is $\tau_0$ which means that CP-OFDM has a complex value every $\tau_0$. On the other hand, FBMC/OQAM has a real value every $\tau_0/2$ meaning a symbol duration of $\tau_0/2$. The subcarrier spacing is $f_0$ for both systems.

In addition, the pulse shaping using well localized filters in both time and frequency domains will provide a higher robustness to frequency offset and Doppler effects and doubly dispersive channels.

However, all these advantages come at the cost of the relaxation of orthogonality in the complex field to the real field leading to the need to use OQAM instead of QAM.

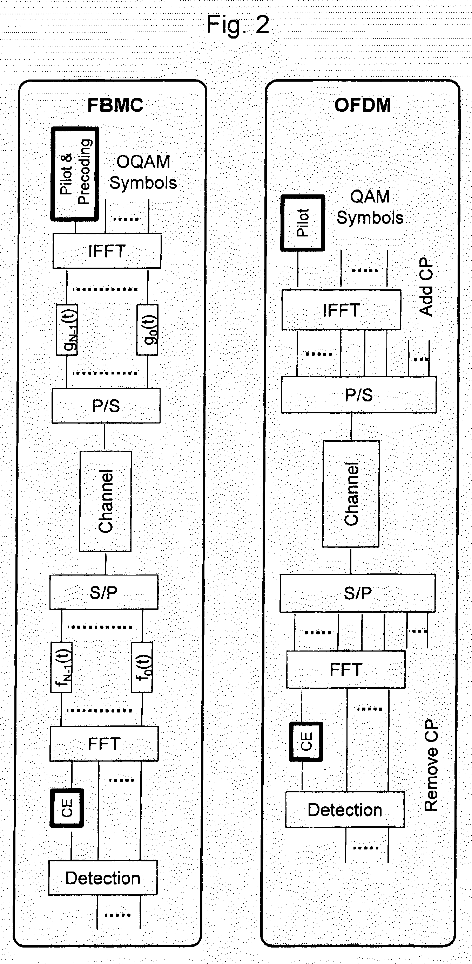

Figure 2 shows the block diagrams of CP-OFDM and FBMC/OQAM. The difference can be summarized by having real-valued OQAM symbols as input to the IFFT in FBMC/OQAM compared to the complex valued QAM symbols in CP-OFDM. $g_n(t)$ and $f_n(t)$ represent the pulse shaping functions in the transmitter Synthesis Filter Bank (SFB) and receiver Analysis Filter Bank (AFB) respectively. It is also clear from the diagrams that no CP is inserted for the FBMC/OQAM case.

In FBMC/OQAM modulation, the baseband equation of a continuous time FBMC/OQAM signal can be written as:

$$s(t) = \sum_{m=0}^{M-1} \sum_n a_{m,n}\, g(t - n\tau_0) e^{j2\pi m f_0 t} e^{j\emptyset_{m,n}} = \sum_{m=0}^{M-1} \sum_n a_{m,n}\, g_{m,n}(t)$$

where $M$ is the number of subcarriers, $f_0 = \frac{1}{2}\tau_0$ is the subcarrier spacing, $g$ is the pulse shape, and $\emptyset_{m,n}$ is an additional pulse phase. $a_{m,n}$ represents the real transmitted symbol at subcarrier $m$ and time $n$.

The baseband version of the received signal on the receiver side can be written as

$$y(t) = (h * s)(t) + \eta(t)$$

Where * denotes the convolution operation, $h(t)$ is the channel impulse response and $\eta(t)$ is an additive noise.

The demodulated received signal at the $(m_0, n_0)$ can be written as

$$y_{m_0,n_0} = H_{m_0,n_0} a_{m_0,n_0} + j \sum_{(p,q)\neq(0,0)} a_{m_0+p,n_0+q}\, H_{m_0+p,n_0+q}\, \langle g \rangle_{m_0+p,n_0+q}^{m_0,n_0} + \eta_{m_0,n_0}$$

With $H_{m,n}$ representing the complex response of the channel at position $(m,n)$ and $\langle g \rangle_{m,n}^{p,q}$ is the ambiguity function that represents the filter characteristics. From the above equation and due to the real orthogonality of the FBMC/OQAM system, one can see an extra noisy imaginary component at the output of the AFB which is known as intrinsic interference.

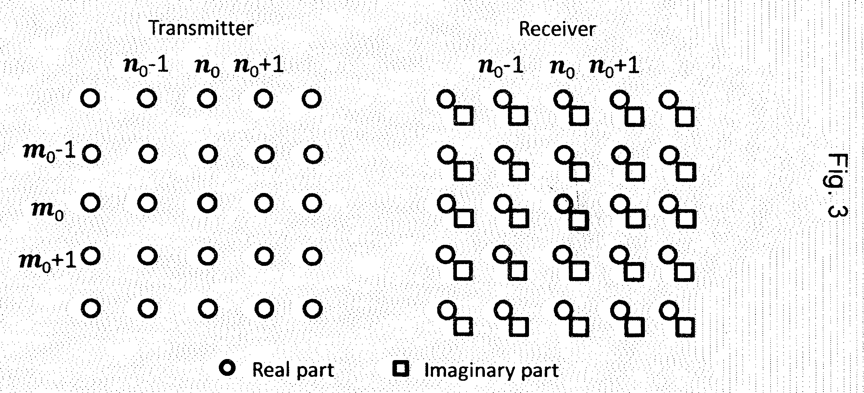

Figure 3 shows the time and frequency lattice for FBMC/OQAM at the transmitter and at the receiver. At the receiver, the transmitted real data at position $(m_0, n_0)$ is no longer real-valued. All the surrounding data symbols interfere in the imaginary domain.

The equation of the demodulated signal can be simplified by taking two valid assumptions into consideration:

- when using well localized filters in both time and frequency domains, the intrinsic interference can be assumed to be coming only from the direct 8 neighbours of position $(m_0, n_0)$;

- the channel can be assumed as constant in this neighbourhood of position $(m_0, n_0)$.

So the equation can be simplified to:

$$y_{m_0,n_0} = H_{m_0,n_0} \left( a_{m_0,n_0} + j \sum_{\substack{(p,q)\neq(0,0) \\ p,q\in\{-1,0,+1\}}} a_{m_0+p,n_0+q} \langle g \rangle_{m_0+p,n_0+q}^{m_0,n_0} \right) + \eta_{m_0,n_0}$$

$$y_{m_0,n_0} = H_{m_0,n_0} \left( a_{m_0,n_0} + j\, I_{m_0,n_0} \right) + \eta_{m_0,n_0}$$

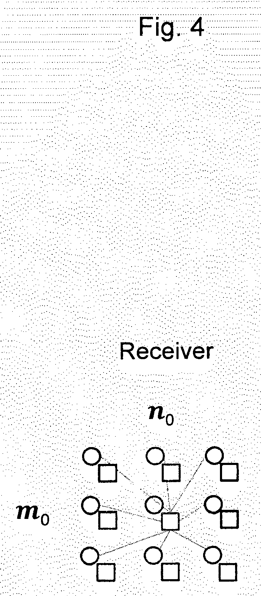

Figure 4 shows the simplified intrinsic interference from the 8 direct neighbours. Due to its real orthogonality, detection of the OQAM symbol should be done in two steps:

- channel equalization,

- taking the real part.

$$\hat{a}_{m_0,n_0} = Re\left\{ \frac{y_{m_0,n_0}}{H_{m_0,n_0}} \right\} \approx Re\left\{ a_{m_0,n_0} + j\, I_{m_0,n_0} + \frac{\eta_{m_0,n_0}}{H_{m_0,n_0}} \right\} \approx a_{m_0,n_0} + \eta'_{m_0,n_0}$$

This is only valid if the channel coefficients are known at the receiver which is not the case in real systems. Channel coefficients have to be estimated first.

The channel estimation problem of the FBMC/OQAM multicarrier modulation scheme can be described as follows: To estimate the channel coefficients using scattered pilot-based techniques, it is assumed that a real valued pilot is transmitted at position $(m_0, n_0)$. Then the received pilot symbol at the receiver side is:

$$y_{m_0,n_0} = H_{m_0,n_0} \left( a_{m_0,n_0} + j\, I_{m_0,n_0} \right) + \eta_{m_0,n_0}$$

Where $a_{m_0,n_0}$ is the transmitted real pilot which is known at the receiver and $I_{m_0,n_0}$ is the intrinsic interference which is a random value dependent on the surrounding transmitted data and not known at the receiver.

To perform coherent channel estimation, the received signal needs to be divided by the transmitted pilot.

$$\hat{H}_{m_0,n_0} = \frac{y_{m_0,n_0}}{a_{m_0,n_0}+j\, I_{m_0,n_0}} = H_{m_0,n_0} + \frac{\eta_{m_0,n_0}}{a_{m_0,n_0}+j\, I_{m_0,n_0}}$$

With this equation, one can distinguish two observations:

- coherent channel estimation cannot be performed due the unknown random intrinsic interference at the receiver $I_{m_0,n_0}$;

- if $I_{m_0,n_0}$ is known at the receiver, then the larger the power of the pseudo-pilot $a_{m_0,n_0}+j\, I_{m_0,n_0}$ the better the performance of channel estimation because the effect of the noise is reduced.

But the main problem of channel estimation for FBMC/OQAM is still not solved. The intrinsic interference is not known; hence channel estimation cannot be performed in a straight forward implementation.

Proposals to address this problem have been made in the following documents:

- J.-P. Javaudin, D. Lacroix and A. Rouxel, "Pilot-aided channel estimation for OFDM/OQAM"," in VTC Spring, 2003.
- C. Lele, R. Legouable and P. Siohan, "Channel estimation with scattered pilots in OFDM/OQAM," in SPAWC, 2008.

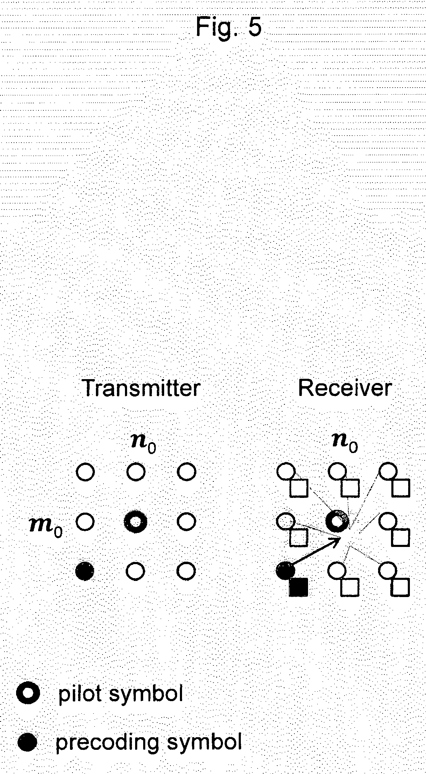

These documents address the problem by forcing the random intrinsic interference at the receiver to be one specific value like 0 for example. This is done by reserving one of the surrounding symbols as a precoding symbol. So in this case, one transmits data on 7 surrounding symbols and use the 8th one as a precoding symbol to cancel the intrinsic interference at the receiver. This is shown in Figure 5 where the pilot symbol and the precoding symbol are marked.

The intrinsic interference from the surrounding 7 data symbols can be written as:

$$I_{m_0,n_0} = \sum_{\substack{(p,q) \neq (0,0),(1,-1) \\ p,q \in \{-1,0,+1\}}} a_{m_0+p,n_0+q} \langle g \rangle_{m_0+p,n_0+q}$$

To cancel the interference at the receiver, the precoding symbol should be chosen such as:

$$b = - \frac{I_{m_0,n_0}}{\langle g \rangle_{m_0+1,n_0-1}}$$

With this method $I_{m_0,n_0}$ is equal to zero at the receiver and the received pilot symbol can be written as:

$$y_{m_0,n_0} = H_{m_0,n_0} a_{m_0,n_0} + \eta_{m_0,n_0}$$

By dividing with the known pilot $a_{m_0,n_0}$ channel coefficients $\hat{H}_{m_0,n_0}$ can be estimated directly.

From this equation the following is observed: The proposed precoding is possible because the intrinsic interference is dependent on the data and the ambiguity function which are both known at the transmitter.

However, using this precoding scheme, the transmit power of the precoding symbol can be very high, depending on the values of data symbols that surround the pilot symbol.

It is thus an object of the present invention to have more flexibility with respect to and control of the required power of transmitting the precoding symbol, e.g. having the possibility to reduce the power required to transmit the precoding symbol.

## SUMMARY OF THE INVENTION

According to one embodiment there is provided a method for transmitting a multicarrier signal, wherein said signal is of the offset quadrature amplitude modulation OQAM type comprising symbols in the time-frequency space, wherein the symbol is one of a pilot symbol, a precoding symbol, and other symbols; the method being characterized in that the precoding symbol is selected such as to force the intrinsic interference of the pilot symbol, when received by the receiver, to have one value out of a predefined set of discrete values, said set containing at least one element different from zero.

This method has the effect and advantage in that it enables for the sender a certain freedom of choosing and determining the precoding instead of forcing the sender into choosing one particular precoding symbol which may be unfavourable for the sender and/or the receiver.

According to one embodiment the symbol is formed by modulating a real-valued symbol and/or the intrinsic interference corresponds to the imaginary part of the demodulated signal.

This has the effect and advantage in that transmission of the real-valued symbol can be performed at twice the symbol rate at which complex-valued symbols, i.e. symbols with real and imaginary part, are transmitted.

According to one embodiment the offset quadrature amplitude modulation is one of filterbank multicarrier offset quadrature amplitude modulation FBMC/OQAM or OFDM/OQAM.

This has the effect and advantage that the transmission method operates without the addition of a cyclic prefix (CP), thus providing a higher useful bitrate and thus also better spectral efficiency than conventional OFDM transmission.

According to one embodiment the selecting of the precoding symbol is performed according to at least one of the following criteria: the transmit power of the precoding symbol is reduced; the received power of the pilot symbol is increased; a tradeoff between the former criteria.

This has the effect and advantage in that the transmitter is enabled to control, by way of choosing the precoding symbol appropriately, the required transmit power, the received power of the pilot symbol, and/or a combination of both. Thus the effect is further that reception of the pilot symbol may be improved while at the same time, transmit power consumption remains the same or is even reduced, such that the overall transmission method can be more power efficient and/or more effective in transmitting than conventional transmission methods.

According to one embodiment the criteria according to which the selecting of the precoding symbol is performed by the transmitter is signalled between the transmitter and the receiver.

This has the effect and advantage that the receiver can determine the intrinsic interference using the criteria transmitted by the transmitter. This simplifies the reception procedure of the receiver.

According to one embodiment, the configuration of the said predefined set of discrete values is signalled between the transmitter and the receiver.

This has the effect and advantage that the receiver can determine the intrinsic interference using the predefined set of discrete values signalled between the transmitter and the receiver. This simplifies the reception procedure of the receiver since it can determine the intrinsic interference as one value out of the predefined set of discrete values.

According to one embodiment the predefined set of discrete values is one of multiple predefined sets of values, wherein the selection of the set is performed according to the link condition.

This has the effect and advantage that the signalling of the criteria according to which the selecting of the precoding symbol is performed by the transmitter can be done efficiently by just transmitting an ID of the predetermined set. Further, the choice of predefined set of discrete values according to the link condition can dynamically adapt and optimize the transmission method according to current interference and channel quality thus further improving efficiency of the transmission method, e.g. concerning power, at the sender and receiver side even under adverse and/or changing channel and interference conditions.

According to one embodiment the link condition takes into account at least one of the following parameters: signal-to-noise ratio, signal-to-interference ratio, Channel Quality Indicator between the transmitter and the receiver.

This has the effect and advantage that the transmitted can use common channel quality indicators, which are readily available to the transmitter and the receiver, to control the selecting of the precoding symbol in a way previously described to obtain favourable power and transmission properties for the communication link between the transmitter and the receiver.

According to one embodiment the policy of switching between the multiple predefined sets of values is signalled between the transmitter and the receiver according to the said link condition.

This has the effect and advantage that signalling of the transmitter's choice set of values among the multiple predefined sets of values may occur less frequently, e.g. only when the transmitter changes its choice according in response to determining a change in the link condition.

According to one embodiment the precoding symbol belongs to the first ring of symbols surrounding the pilot symbol in the time-frequency space.

This has the effect and advantage that, using well localized filters in both time and frequency domains, the intrinsic interference of a symbol can be assumed to come only from the direct neighbours of the symbol, thus simplifying the controlling at the transmitter side via the choice of precoding symbol the intrinsic interference obtained at the receiver side and the determining of the intrinsic interference at the receiver side itself.

According to one embodiment there is provided a method for receiving a multicarrier signal transmitted by the method for transmitting the multicarrier signal according to one of the previous embodiments, wherein channel estimation is based on a pilot symbol, wherein the received pilot symbol at coordinate $m_0, n_0$ in the time-frequency space is

$$y_{m_0,n_0} = H_{m_0,n_0}(a_{m_0,n_0} + jX) + \eta_{m_0,n_0}$$

with $a_{m_0,n_0}$ being the transmitted real pilot signal, $X$ being the intrinsic interference and $\eta_{m_0,n_0}$ being additive noise, the method being characterized in that channel estimation is performed by the following steps: (i) estimating the channel power; (ii) estimating the received pilot symbol power by dividing the pilot symbol power by the estimated channel power of step (i); (iii) recognizing the value of the imaginary part of the pilot symbol as one value $X$ out of a predefined set of discrete values and based on the known value $a_{m_0,n_0}$ of the pilot symbol and the result of step (ii); and (iv) estimating the channel coefficient $\hat{H}_{m_0,n_0}$ based on the received pilot symbol according to the formula

$$\hat{H}_{m_0,n_0} = \frac{y_{m_0,n_0}}{a_{m_0,n_0} + jX}$$

This has the effect and advantage, that the channel coefficient can be estimated solely on the basis of the channel power estimation and the estimated received pilot symbol power, without precise information about the imaginary part of the pilot symbol.

According to one embodiment the method comprises a symbol being formed by demodulating the signal into a complex-valued symbol and/or wherein the intrinsic interference corresponds to the imaginary part of the demodulated signal.

This has the effect and advantage, that the real part and the imaginary part of a symbol can be distinguished based on information about the intrinsic interference.

According to one embodiment the channel power $|H_{m_0,n_0}|^2$ is estimated by averaging the received power of data symbols surrounding the pilot symbol.

This has the effect and advantage that the received power at position $(m_0, n_0)$ does not have to be known precisely but can be estimated.

According to one embodiment the received pilot symbol power is estimated by dividing the pilot symbol power by the estimated channel power of step (i) according to the formula

$$\left|a_{m_0,n_0} + jX\right|^2 = \left|y_{m_0,n_0}\right|^2 / \left|H_{m_0,n_0}\right|^2;$$

This has the effect and advantage that the received pilot symbol power can be estimated.

According to one embodiment of the methods for transmitting and receiving the multicarrier signal, according to the previous embodiments the value and location in the time-frequency space of the pilot symbols are known to at least one receiver intended to perform a reception of said multicarrier signal.

This has the effect and advantage that the presence of a pilot symbol can be exploited at the transmitter and the receiver side for performing channel estimation.

According to one embodiment there is provided an apparatus for transmitting a multicarrier signal, wherein said signal is of the offset quadrature amplitude modulation OQAM type comprising symbols in the time-frequency space,

wherein the symbol is one of

- a pilot symbol,

- a precoding symbol, and

- other symbols;

the apparatus being **characterized in that it comprises**
a module for selecting the precoding symbol such as to force the intrinsic interference of the pilot symbol, when received by the receiver, to have one value out of a predefined set of discrete values, said set containing at least one element different from zero.

According to one embodiment the apparatus further comprises one or more modules for carrying out a method according to one of the previous embodiments.

According to one embodiment there is provided a computer program comprising computer program code which when being executed on a computer enables said computer to carry out a method according to one of the embodiments of the invention.

## DESCRIPTION OF THE DRAWINGS

Figure 1 shows the signal structures of CP-OFDM and FBMC/OQAM communication in the time and frequency domain.

Figure 2 shows block diagrams of systems for performing the CP-OFDM or the FBMC/OQAM multicarrier modulation schemes.

Figure 3 shows the symbols of FBMC/OQ AM multicarrier modulation scheme in the time and frequency domain.

Figure 4 shows the simplified intrinsic interference from the 8 direct neighbours of a symbol.

Figure 5 shows the symbols, including a pilot and a precoding symbol at the transmitter and receiver with the simplified intrinsic interference from the 8 direct neighbours of the pilot symbol.

Figure 6 shows a schematic signal structure with the precoding symbol forcing the intrinsic interference at the pilot position to be a value out of a predefined set of discrete values.

Figure 7 shows the Mean Square Error (MSE) evaluation of the channel estimation performance of different channel estimation schemes against data Signal to Noise Ratio (SNR).

Figure 8 shows the MSE evaluation of the channel estimation performance of different channel estimation schemes against the transmit symbol precoding SNR.

## DETAILED DESCRIPTION

At first, some terms used in the description will be defined in the following list of abbreviations.

CP-OFDM      Cyclic Prefix Orthogonal Frequency Division Multiplexing
FBMC         Filter Bank Multicarrier
OQAM         Offset Quadrature Amplitude Modulation
SFB          Synthesis Filter Bank
AFB          Analysis Filter Bank
SNR          Signal to Noise Ratio
MSE          Mean Square Error

In the following, embodiments of the invention will be described.
In one embodiment there is a difference from the state of art at least in selecting the precoding symbol such that, the random imaginary part of the received pilot is one out of a set of possible values. So instead of forcing the intrinsic interference at the pilot position to be 0, according to one embodiment there is proposed to force it to a value $X$, where $X$ is chosen by the transmitter from a set of values $\{\alpha_1, \alpha_2, \alpha_3, ...\}$.
But since the value of $X$ is not known at the receiver side, it has to be estimated before performing the channel estimation.
According to one aspect of the invention, the precoding symbol is chosen at the transmitter side such that the intrinsic interference of the received pilot is forced to one value out of a set of discrete values.

$$X \in \{\alpha_1, \alpha_2, \alpha_3, ...\}$$

The precoding symbol can be written as:

$$b = -\frac{I_{m_0,n_0} + X}{\langle g \rangle_{m_0+1,n_0-1}}$$

At the receiver, the received pilot symbol can be written as:

$$y_{m_0,n_0} = H_{m_0,n_0}(a_{m_0,n_0} + jX) + \eta_{m_0,n_0}$$

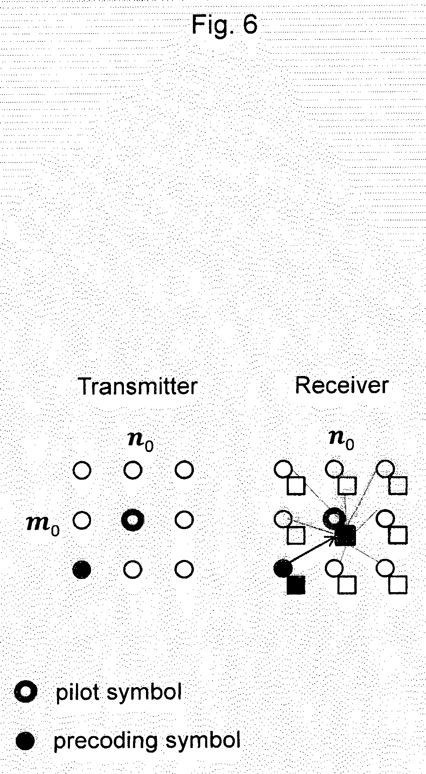

Figure 6 shows a schematic signal structure with the precoding symbol forcing the intrinsic interference at the pilot position to be a value $X \in \{\alpha_1, \alpha_2, \alpha_3, ...\}$.
From these two equations, it can be obtained that the choice of precoding symbol will have at least the following two effects:

- the precoding symbol transmit power at the transmitter will be influenced;

- the received pilot symbol power at the receiver will be influenced.

In other words, the choice of $X \in \{\alpha_1, \alpha_2, \alpha_3, ...\}$ at the transmitter side can be made in order to

- minimize the precoding symbol transmit power or

- maximize the received pilot symbol power or

- obtain a tradeoff between the two previous effects, or

- meet any other criterion.

On the receiver side, the value of $X$ is not known and hence channel estimation cannot be performed directly. However, the value of $X$ can be estimated easily through 3 steps. Recalling the equation of the received pilot

$$y_{m_0,n_0} = H_{m_0,n_0}(a_{m_0,n_0} + jX) + \eta_{m_0,n_0}$$

• Step 1: The receiver can estimate the power of the channel $|H_{m_0,n_0}|^2$ by taking the average of the received power of the data symbols around the pilot position.
• Step 2: The receiver estimates the power of the transmitted pilot symbol by dividing the power of the received pilot symbol by the estimated power of the channel from Step 1.

$$\left|a_{m_0,n_0} + jX\right|^2 = \left|y_{m_0,n_0}\right|^2 / \left|H_{m_0,n_0}\right|^2$$

Now since $a_{m_0,n_0}$ is known at the receiver, an estimated of $X$ is obtained.

- Step 3: The receiver estimates the channel coefficients

$$\widehat{H}_{m_0,n_0} = \frac{y_{m_0,n_0}}{a_{m_0,n_0} + jX}$$

Different predefined sets of discrete values, $\{\alpha_1, \alpha_2, \alpha_3, ...\}, \{\beta_1, \beta_2, \beta_3, ...\}, (\delta_1, \delta_2, \delta_3, ...), ...$ , can be defined and exchanged between the transmitter and the receiver by signaling.

The transmitter selects one predefined set of discrete values according to the system status, for example according to the Signal to Noise Ratio (SNR). This means different predefined sets of discrete values can be used for different SNR ranges. The transmitter has to signal to the receiver which predefined set of discrete values is using.

Using a simplified system model, the new method and techniques for performing channel estimation described above are compared with the state of art.

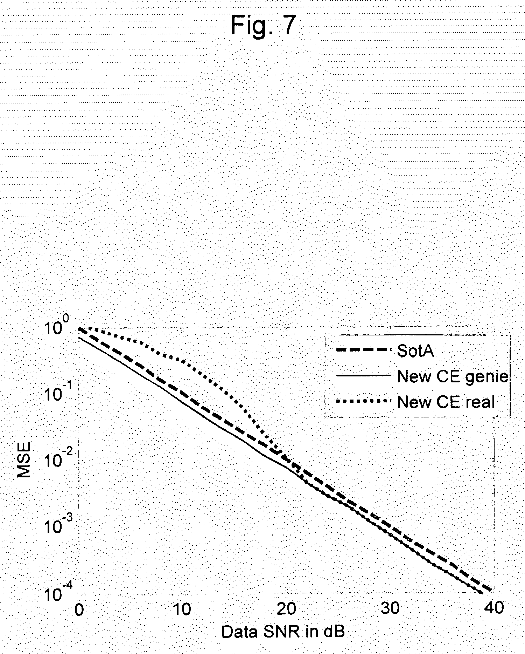

Figure 7 shows the Mean Square Error (MSE) of the channel estimation performance of the new method and techniques for performing channel estimation described above compared with the state of art against Data SNR in dB. The dashed plot represents a state of art channel estimation where the intrinsic interference of the received pilot is forced to 0. The line plot represents the new method and techniques for performing channel estimation where the value of the chosen $X$ is known at the receiver. In this simulation, the value of $X$ is chosen to minimize the transmit power of the precoding symbol. The gain of around 2 dB between the two plots is due to the higher received power of the pilot symbol.

The dotted plot represents the new method and techniques for performing channel estimation with the estimation of $X$ at the receiver. At high SNR values, the proposed solution outperforms the state of art channel estimation. However, since the simulation parameters have been chose heuristically, the performance degrades at low SNR. By adopting the set of values for $X$, e.g., to the channel condition, the performance will improve also for low SNR.

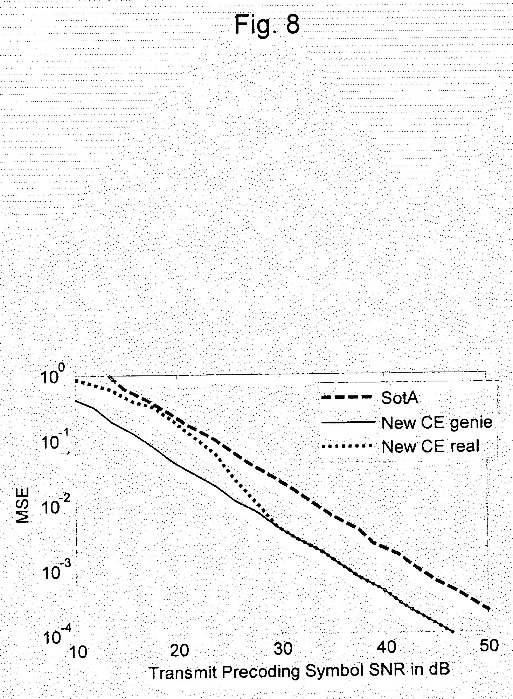

Figure 8 shows a plot of the MSE against the Transmit Precoding Symbol SNR. The new method and techniques for performing channel estimation always outperform the state of art channel estimation and the gain can reach up to around 8 dB.

For a given Data SNR, the precoding symbol transmitted power and the pilot symbol received power are compared for both channel estimation method and techniques, the new one and the one according to the state of the art. The table below shows this comparison.

|  | State of Art solution | New proposed solution |
|---|---|---|
| Precoding symbol TX power | 20.5 | 5.8 |
| Pilot symbol RX power | 1 | 2 |

It can be seen clearly that the new method and techniques for performing channel estimation reduce the transmit power of the precoding symbol and at the same time boost the received power of the pilot symbol which improves the channel estimation performance.

In summary, the advantages of the new method and techniques for performing channel estimation can be stated as:

• The new method and techniques for performing channel estimation outperform channel estimation techniques of the state of the art since a lower MSE can be attained.

• The new method and techniques for performing channel estimation can achieve a reduction in transmit power of precoding symbol.

• The new method and techniques for performing channel estimation can boost the received pilot symbol power and thus improve overall channel estimation performance.

**Claims**

1. A method for transmitting a multicarrier signal,
   wherein said signal is of the offset quadrature amplitude modulation OQAM type comprising symbols in the time-frequency space,
   wherein the symbol is one of

      - a pilot symbol,
      - a precoding symbol, and
      - other symbols;

   the method being **characterized in that**
   the precoding symbol is selected such as to force the intrinsic interference of the pilot symbol, when received by the receiver, to have one value out of a predefined set of discrete values, said set containing at least one element different from zero.

2. The transmission method of claim 1, wherein said symbol is formed by modulating a real-valued symbol and/or the intrinsic interference corresponds to the imaginary part of the demodulated signal.

3. The transmission method of one of the previous claims, wherein
   said offset quadrature amplitude modulation is one of filterbank multicarrier offset quadrature amplitude modulation FBMC/OQAM or OFDM/OQAM.

4. The transmission method of one of the previous claims, wherein the selecting of the precoding symbol is performed according to at least one of the following criteria:

      the transmit power of the precoding symbol is reduced;
      the received power of the pilot symbol is increased;
      a tradeoff between the former criteria.

5. The transmission method according to one of the preceding claims, wherein the said criteria is signalled between the transmitter and the receiver, and/or wherein the configuration of the said predefined set of discrete values is signalled between the transmitter and the receiver.

6. The transmission method of one of the previous claims, wherein the predefined set of discrete values is one of multiple predefined sets of values,
wherein the selection of the set is performed according to the link condition, and/or
wherein the policy of switching between the multiple predefined sets of values is signalled between the transmitter and the receiver according to the said link condition.

7.  The transmission method of one of the previous claims, wherein the said link condition takes into account at least one of the following parameters: signal-to-noise ratio, signal-to-interference ratio, Channel Quality Indicator between the transmitter and the receiver.

8.  The transmission method of one of the previous claims, wherein a precoding symbol belongs to the first ring of symbols surrounding the pilot symbol in the time-frequency space.

9.  Method for receiving a multicarrier signal transmitted by the method according to one of claims 1 to 8,
wherein channel estimation is based on a pilot symbol
wherein the received pilot symbol at coordinate $m_0$, $n_0$ in the time-frequency space is

$$y_{m_0,n_0} = H_{m_0,n_0}(a_{m_0,n_0} + jX) + \eta_{m_0,n_0}$$

with $a_{m_0,n_0}$ being the transmitted real pilot signal, $X$ being the intrinsic interference and $\eta_{m_0,n_0}$ being additive noise, the method being **characterized in that** channel estimation is performed by the following steps:

(i) estimating the channel power;
(ii) estimating the received pilot symbol power by dividing the pilot symbol power by the estimated channel power of step (i);
(iii) recognizing the value of the imaginary part of the pilot symbol as one value $X$ out of a predefined set of discrete values and based on the known value $a_{m_0,n_0}$ of the pilot symbol and the result of step (ii); and
(iv) estimating the channel coefficient $\hat{H}_{m_0,n_0}$ based on the received pilot symbol according to the formula

$$\hat{H}_{m_0,n_0} = \frac{y_{m_0,n_0}}{a_{m_0,n_0} + jX}$$

10. The method for receiving of claim 9,
wherein a symbol is formed by demodulating the signal into a complex-valued symbol and/or
wherein the intrinsic interference corresponds to the imaginary part of the demodulated signal.

11. The method of claim 9 or 10, wherein
the channel power $|H_{m_0,n_0}|^2$ is estimated by averaging the received power of data symbols surrounding the pilot symbol.

12. The method of claim 9, 10, or 11, wherein
the received pilot symbol power is estimated by dividing the pilot symbol power by the estimated channel power of step (i) according to the formula

$$\left| a_{m_0,n_0} + jX \right|^2 = \left| y_{m_0,n_0} \right|^2 / \left| H_{m_0,n_0} \right|^2;$$

13. The method according to one of the previous claims, wherein the value and location in the time-frequency space of the pilot symbols are known to at least one receiver intended to perform a reception of said multicarrier signal.

14. An apparatus for transmitting a multicarrier signal,
wherein said signal is of the offset quadrature amplitude modulation OQAM type comprising symbols in the time-frequency space,
wherein the symbol is one of

- a pilot symbol,
- a precoding symbol, and
- other symbols;

the apparatus being **characterized in that it comprises**
a module for selecting the precoding symbol such as to force the intrinsic interference of the pilot symbol, when received by the receiver, to have one value out of a predefined set of discrete values, said set containing at least one element different from zero.

15. A computer program comprising computer program code which when being executed on a computer enables said computer to carry out a method according to one of claims 1 to 13.

**Patentansprüche**

1. Ein Verfahren zum Übertragen eines Multicarriersignals,
wobei das Signal vom Offset Quadrature Amplitudenmodulation OQAM Typ ist und Symbole im Zeit-Frequenz-Raum aufweist,
wobei das Symbol eines ist aus

- einem Pilotsymbol,
- einem Precoding-Symbol, und
- anderen Symbolen;

wobei das Verfahren **gekennzeichnet ist dadurch**, dass
das Precoding-Symbol so gewählt wird, dass die intrinsische Interferenz des Pilotsymbols, wenn empfangen vom Empfänger, einen Wert aus einem vordefinierten Satz von diskreten Werten annimmt, wobei der Satz zumindest ein von Null verschiedenes Element aufweist.

2. Das Übertragungsverfahren nach Anspruch 1, wobei das Symbol gebildet wird durch Modulieren eines real-wertigen Symbols und/oder der intrinsischen Interferenz, die dem imaginären Teil des demodulierten Signals entspricht.

3. Das Übertragungsverfahren nach einem der vorhergehenden Ansprüche, wobei
die Offset Quadrature Amplitudenmodulation eine vom Typ Filterbank Multicarrier Offset Quadrature Amplitudenmodulation FBMC/OQAM oder OFDM/OQAM ist.

4. Das Übertragungsverfahren nach einem der vorhergehenden Ansprüche, wobei das Auswählen des Precodingsymbols nach zumindest einem der folgenden Kriterien durchgeführt wird:

die Übertragungsleistung des Precodingsymbols wird reduziert;
die Empfangssleistung des Pilotsymbols wird erhöht;
ein Tradeoff zwischen den vorgenannten Kriterien.

5. Das Übertragungsverfahren nach einem der vorhergehenden Ansprüche, wobei die Kriterien zwischen dem Sender und dem Empfänger signalisiert werden, und/oder
wobei die Konfiguration des vordefinierten Satzes von diskreten Werten zwischen dem Sender und dem Empfänger signalisiert wird.

6. Das Übertragungsverfahren nach einem der vorhergehenden Ansprüche, wobei der vordefinierte Satz von diskreten Werten einer von mehreren vordefinierten Sätzen von Werten ist, und
wobei die Auswahl des Satzes durchgeführt wird gemäß dem Verbindungszustand und/oder
wobei die Policy des Umschaltens zwischen den mehreren vordefinierten Sätzen von Werten signalisiert wird zwischen dem Sender und dem Empfänger gemäß dem Verbindungszustand.

7. Das Übertragungsverfahren nach einem der vorhergehenden Ansprüche, wobei der Verbindungszustand zumindest einen der folgenden Parameter berücksichtigt:

Signal/Rausch-Verhältnis, Signal/Interferenz-Verhältnis, Kanalqualitätsindikator zwischen dem Sender und dem Empfänger.

8. Das Übertragungsverfahren nach einem der vorhergehenden Ansprüche, wobei ein Precoding-Symbol zu dem ersten Ring von Symbolen gehört, die das Pilotsymbol in dem Zeit-Frequenzraum umgeben.

9. Verfahren zum Empfangen eines Multicarrier-Signals, das durch ein Verfahren gemäß einem der Ansprüche 1 bis 8 übertragen wird,
wobei die Kanalabschätzung basiert auf einem Pilotsymbol,
wobei das empfangene Pilotsymbol bei einer Koordinate $m_0, n_0$ in dem Zeit-Frequenz-Raum ist

$$y_{m_0,n_0} = H_{m_0,n_0}(a_{m_0,n_0} + jX) + \eta_{m_0,n_0}$$

mit $a_{m_0,n_0}$ als dem übertragenen realen Pilotsignal, $X$ als der intrinsischen Interferenz, und $\eta_{mo,no}$ als dem additiven Rauschen,
wobei das Verfahren **gekennzeichnet ist dadurch**, dass die Kanalabschätzung durchgeführt wird **durch** die folgenden Schritte:

(i) Abschätzen der Kanalleistung;
(ii) Abschätzen der empfangenen Pilotsymbolleistung **durch** Dividieren der Pilotsymbolleistung **durch** die abgeschätzte Kanalleistung des Schritts (i);
(iii) Erkennen des Werts des imaginären Teils des Pilotsymbols als ein Wert $X$ aus dem vorbestimmten Satz von diskreten Werten und basierend auf dem bekannten Wert $a_{m_0,n_0}$ des Pilotsymbols und dem Ergebnis von Schritt (ii); und
(iv) Abschätzen des Kanalkoeffizienten $\hat{H}_{m_0,n_0}$ basierend auf dem empfangenen Pilotsymbol gemäß der Formel

$$\hat{H}_{m_0,n_0} = \frac{y_{m_0,n_0}}{a_{m_0,n_0} + jX}$$

10. Das Verfahren nach Anspruch 9,
wobei ein Symbol gebildet wird durch Demodulieren des Signals in ein komplexwertiges Symbol und/oder
wobei die intrinsische Interferenz dem Imaginärteil des demodulierten Signals entspricht.

11. Das Verfahren nach Anspruch 9 oder 10, wobei
die Kanalleistung $|H_{m_0,n_0}|^2$ abgeschätzt wird durch Mitteln der empfangenen Leistung von Datensymbolen, die das Pilotsymbol umgeben.

12. Das Verfahren nach Anspruch 9, 10 oder 11, wobei
die empfangene Pilotsymbolleistung abgeschätzt wird durch Dividieren der Pilotsymbolleistung durch die abgeschätzte Kanalleistung von Schritt (i) gemäß der Formel

$$\left|a_{m_0,n_0} + jX\right|^2 = \left|y_{m_0,n_0}\right|^2 / \left|H_{m_0,n_0}\right|^2;$$

13. Das Verfahren nach einem der vorhergehenden Ansprüche, wobei der Wert und der Ort in dem Zeit-Frequenzraum der Pilotsymbole zumindest einem Empfänger bekannt ist, der einen Empfang des Multicarrier-Signals durchzuführen beabsichtigt.

14. Eine Vorrichtung zum Übertragen eines Multicarrier-Signals,
wobei das Signal vom Offset Quadrature Amplitudenmodulation OQAM Typ ist aufweisend Symbole im Zeit-Frequenzraum,
wobei das Symbol eines ist aus

- einem Pilotsymbol,
- einem Precoding-Symbol, und

- anderen Symbolen;

wobei die Vorrichtung **dadurch gekennzeichnet ist, dass** sie aufweist
ein Modul zum Auswählen des Precoding-Symbols so, dass die intrinsische Interferenz des Pilotsymbols, wenn empfangen vom Empfänger, einen Wert aus einem vordefinierten Satz von diskreten Werten annimmt, wobei der Satz zumindest ein von Null verschiedenes Element aufweist.

15. Ein Computerprogramm aufweisend Computerprogrammcode der, wenn er auf einem Computer ausgeführt wird, den Computer in die Lage versetzt, ein Verfahren gemäß einem der Ansprüche 1 bis 13 auszuführen.


**Revendications**

1. Procédé de transmission d'un signal multiporteuse, dans lequel ledit signal est du type à modulation d'amplitude en quadrature décalée OQAM comprenant des symboles dans l'espace temps-fréquence, dans lequel le symbole est l'un parmi

   - un symbole pilote,
   - un symbole de précodage, et
   - d'autres symboles ;

   le procédé étant **caractérisé en ce que**
   le symbole de précodage est choisi de façon à forcer l'interférence intrinsèque du symbole pilote, lorsqu'il est reçu par le récepteur, afin d'avoir une valeur parmi un ensemble prédéfini de valeurs discrètes, ledit ensemble contenant au moins un élément différent de zéro.

2. Procédé de transmission selon la revendication 1, dans lequel ledit symbole est formé par modulation d'un symbole à valeur réelle, et/ou l'interférence intrinsèque correspond à la partie imaginaire du signal démodulé.

3. Procédé de transmission selon l'une des revendications précédentes, dans lequel ladite modulation d'amplitude en quadrature décalée est l'une d'une modulation d'amplitude en quadrature décalée multiporteuse de banc de filtres FBMC/OQAM ou d'un OFDM/OQAM.

4. Procédé de transmission selon l'une des revendications précédentes, dans lequel la sélection du symbole de précodage est réalisée selon au moins l'un des critères suivants :

   la puissance de transmission du symbole de précodage est réduite ;
   la puissance reçue du symbole pilote est augmentée ;
   un compromis entre les critères précédents.

5. Procédé de transmission selon l'une des revendications précédentes, dans lequel lesdits critères sont signalés entre l'émetteur et le récepteur, et/ou dans lequel la configuration dudit ensemble prédéfini de valeurs discrètes est signalée entre l'émetteur et le récepteur.

6. Procédé de transmission selon l'une des revendications précédentes, dans lequel l'ensemble prédéfini de valeurs discrètes est l'un de multiples ensembles prédéfinis de valeurs, dans lequel la sélection de l'ensemble est réalisée selon la condition de liaison, et/ou dans lequel la politique de commutation entre les multiples ensembles prédéfinis de valeurs est signalée entre l'émetteur et le récepteur selon ladite condition de liaison.

7. Procédé de transmission selon l'une des revendications précédentes, dans lequel ladite condition de liaison prend en compte au moins l'un des paramètres suivants : le rapport signal sur bruit, le rapport signal sur interférence, l'indicateur de qualité de canal entre l'émetteur et le récepteur.

8. Procédé de transmission selon l'une des revendications précédentes, dans lequel un symbole de précodage appartient au premier anneau de symboles entourant le symbole pilote dans l'espace temps-fréquence.

9. Procédé de réception d'un signal multiporteuse transmis par le procédé selon l'une des revendications 1 à 8,

dans lequel l'estimation de canal est basée sur un symbole pilote
dans lequel le symbole pilote reçu à la coordonnée *mo, no* dans l'espace temps-fréquence est

$$y_{m_0,n_0} = H_{m_0,n_0}(a_{m_0,n_0} + jX) + \eta_{m_0,n_0}$$

$a_{mo,no}$ étant le signal pilote réel transmis, $X$ étant l'interférence intrinsèque et $\eta_{mo,no}$ étant le bruit additif,
le procédé étant **caractérisé en ce que** l'estimation de canal est réalisée par les étapes suivantes :

(i) estimation de la puissance de canal ;
(ii) estimation de la puissance de symbole pilote reçu en divisant la puissance de symbole pilote par la puissance de canal estimée de l'étape (i) ;
(iii) reconnaissance de la valeur de la partie imaginaire du symbole pilote comme une valeur $X$ parmi un ensemble prédéfini de valeurs discrètes et sur la base de la valeur connue $a_{mo,no}$ du symbole pilote et du résultat de l'étape (ii) ; et
(iv) estimation du coefficient de canal $\hat{H}_{mo,no}$ sur la base du symbole pilote reçu selon la formule

$$\hat{H}_{m_0,n_0} = \frac{y_{m_0,n_0}}{a_{m_0,n_0} + jX}$$

10. Procédé de réception selon la revendication 9, dans lequel un symbole est formé en démodulant le signal en un symbole à valeur complexe et/ou dans lequel l'interférence intrinsèque correspond à la partie imaginaire du signal démodulé.

11. Procédé selon la revendication 9 ou 10, dans lequel
la puissance de canal $|H_{mo,no}|^2$ est estimée en moyennant la puissance reçue de symboles de données entourant le symbole pilote.

12. Procédé selon la revendication 9, 10 ou 11, dans lequel
la puissance de symbole pilote reçu est estimée en divisant la puissance de symbole pilote par la puissance de canal estimée de l'étape (i) selon la formule

$$\left|a_{m_0,n_0} + jX\right|^2 = \left|y_{m_0,n_0}\right|^2 / \left|H_{m_0,n_0}\right|^2 ;$$

13. Procédé selon l'une des revendications précédentes, dans lequel la valeur et l'emplacement de l'espace temps-fréquence des symboles de pilote sont connus d'au moins un récepteur censé réaliser une réception dudit signal multiporteuse.

14. Appareil de transmission d'un signal multiporteuse,
dans lequel ledit signal est du type à modulation d'amplitude en quadrature décalée OQAM comprenant des symboles dans l'espace temps-fréquence,
dans lequel le symbole est l'un parmi

- un symbole pilote,
- un symbole de précodage, et
- d'autres symboles ;

l'appareil étant **caractérisé en ce qu'**il comprend un module destiné à sélectionner le symbole de précodage de façon à forcer l'interférence intrinsèque du symbole pilote, lorsqu'elle est reçue par le récepteur, afin d'avoir une valeur parmi un ensemble prédéfini de valeurs discrètes, ledit ensemble contenant au moins un élément différent de zéro.

15. Programme informatique comprenant un code de programme informatique qui, lorsqu'il est exécuté sur un ordinateur, permet audit ordinateur de réaliser un procédé selon l'une des revendications 1 à 13.

Fig. 1

## Fig. 2

Transmitter

Receiver

$n_0-1$ $n_0$ $n_0+1$

$n_0-1$ $n_0$ $n_0+1$

$m_0-1$

$m_0$

$m_0+1$

O Real part    ☐ Imaginary part

Fig. 3

Fig. 4

Receiver

$n_0$

$m_0$

## Fig. 5

Transmitter                    Receiver

$n_0$                          $n_0$

$m_0$

○ pilot symbol

● precoding symbol

# Fig. 6

## Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.-P. JAVAUDIN ; D. LACROIX ; A. ROUXEL.** Pilot-aided channel estimation for OFDM/OQAM. VTC Spring, 2003

- **C. LELE ; R. LEGOUABLE ; P. SIOHAN.** Channel estimation with scattered pilots in OFDM/OQAM. SPAWC, 2008